# EUROPEAN PATENT SPECIFICATION

(11) **EP 0 454 751 B1**
(45) Date of publication and mention of the grant of the patent: **15.12.1993**
(21) Application number: 90902346.7
(22) Date of filing: 18.01.1990
(51) Int. Cl.: E01B 9/68

(54) **RAIL PADS**
SCHIENENLAGER
TAMPON POUR RAIL

(30) Priority: 20.01.1989 GB 8901274
(43) Date of publication of application: 06.11.1991
(73) Proprietor: PANDROL LIMITED, Weybridge, Surrey KT15 2BH (GB)
(72) Inventor: LEEVES, Geoffrey, Gordon, Maidstone Kent ME1 4NB (GB); ABRAHAMS, Paul, Anthony, Bedfordshire LU5 4DA (GB)
(74) Representative: Fenlon, Christine Lesley
(86) International application number: GB9000079
(87) International publication number: WO9008224

(56) References cited:
- DE-A- 2 504 165
- GB-A- 611 753
- SU-A- 180 437
- US-A- 4 648 554

## Description

The present invention relates to rail pads, and particularly to a pad which is positioned between the foot of a railway rail and an underlying rail foundation on which the rail stands, in order to cushion the rail from the foundation, so as to limit the transmission of dynamic forces to the foundation. The pad also insulates the rail electrically from the foundation if it is required to pass electric currents through the rail, for example for signalling work. In some cases such a pad comprises a membrane of elastomeric material, for example natural rubber, with protrusions extending in opposite directions from its two major faces: see, for example, United Kingdom Patent Specifications Nos. 841776 and 2161524. The protrusions may, for example, be in the form of cylindrical studs or ribs running along and/or across the pad.

In some pads, for example as disclosed in United Kingdom Patent Specification No. 611753, U.S.S.R. Patent Specification No. 180437, and German Patent Specification No. 2504165, the protrusions on one face of the pad do not register, i.e. overlap, with those on the opposite face so that when the membrane is horizontal no vertical line through the pad passes through more than one protrusion. It is believed, however, that none of these pads have been used, or proposed for use, in a rail/rail foundation assembly.

According to the present invention, there is provided a pad which is suitable for positioning between the foot of a railway rail and an underlying rail foundation in order to cushion the rail from the foundation, the pad comprising a uniformly-thick membrane of elastomeric material having two major faces from which protrusions of uniform height extend, such that when the membrane is horizontal no vertical line passes through more than one protrusion, characterised in that the stiffness of the pad varies from one edge of the pad to that edge of the pad which is opposite said one edge, such that the pad is stiffer in the vicinity of the said one edge than in the vicinity of the opposite edge.

Such variation in stiffness between the two parts of the pad is desirable at curves on a railway track and may be obtained by varying across the pad the composition of the material of the pad. However, it is more convenient to ensure that the ratio between the total area of protruding material and the total area of membrane free from protrusions is greater at the stiffer side of the pad that at the less stiff side of the pad. This may be achieved by having the protrusions closer together and/or wider where greater stiffness is required.

The pad is preferably made of a so-called engineering thermoplastic elastomer with high flexural strength, for example a thermoplastic copolyester elastomer such as is sold by E.I. Du Pont de Nemours & Company under the Registered Trade Mark "HYTREL" - see their United Kingdom Patent Specifications Nos. 1323727, 1372630 and 1404340.

When a pad embodying the present invention is in use between a rail and a rail foundation, instead of the pad being subjected only to compression, as in the prior rail pads disclosed in United Kingdom Patent Specification Nos. 841776 and 2161524, the pad is subjected also to bending. With only a small downward force on the pad, the membrane adopts a wavy configuration but does not touch the rail or the rail foundation. With an increasing downward force on the pad the membrane is further distorted and at first just touches the rail directly above each protrusion on the lower face of the membrane and just touches the foundation directly below each protrusion on the upper face of the membrane. Further increase of the downward force on the pad increases the area of the membrane which is in contact with the rail and the foundation and eventually a point is reached where further increase in the downward force on the pad does not result in substantial further depression or distortion of the protrusions or the membrane if, as is proposed, the material of the pad has a Shore "A" hardness of at least 30, better still about 40 or more, even as high as 72 or more. The desirable value depends, inter alia, on the anticipated downward forces on the pad. The fact that when the downward force on the pad increases a point is eventually reached at which further increase of the force will not result in substantial further compression or distortion of the membrane or the protrusions has the advantage that when a particularly heavy train passes over the pad the pad does not become so much thinner, and the rail does not sink so far, that the downward force exerted by the clip on the foot of the rail becomes unacceptably low.

Preferably, the distance between two adjacent protrusions on the same face of the membrane is at least 1½ times, or at least twice, the width of the two protrusions. Each protrusion may be an island; it may have a circular end face, in which case it may be a short cylinder.

Each protrusion may be elongate as seen from above when the membrane is horizontal, in which case it may be a rib extending along the entire length of the pad, measured in the direction in which vehicles are intended to travel over the pad, and each protrusion may be of rectangular cross-section.

Three examples in accordance with the invention are described below with reference to the accompanying drawings, in which:-
Figure 1 shows a plan view of a first pad which does not embody the present invention;
Figure 2 shows a sectional view of the same pad, taken as indicated by the arrows II in Figure 1;
Figure 3 shows a plan view of part of a pad which embodies the present invention;
Figure 4 shows a sectional view of the pad of Fig. 3, taken as indicated by the arrows IV in Figure 3;
Figure 5 shows a plan view of part of a second pad which does not embody the present invention; and
Figure 6 shows a sectional view of the second pad, taken as indicated by the arrows VI in Figure 5.

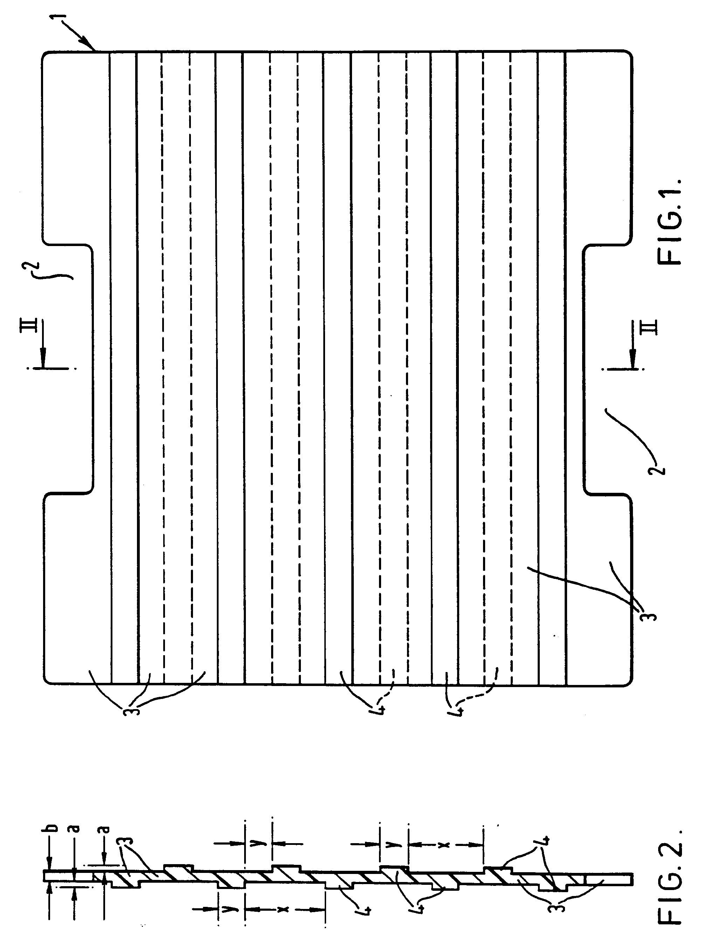

Figures 1 and 2 show a substantially rectangular pad 1 which is intended to lie between the foot of a railway rail and a rail foundation, for example a concrete railway sleeper, in order to cushion the rail and, if the rail is to be used for carrying electric currents, to electrically insulate the rail from the foundation. The rail is intended to extend from left to right, considering Figure 1, i.e. vehicles travelling along the rail will travel from left to right or from right to left over the pad. The rail is to be held down by so-called P-R clips or e-clips as shown in United Kingdom Patent Specification No. 1213762 or 1510224 which are held down by clip-anchoring devices, which, if the rail foundation is of concrete, may be as shown in those patent specifications. To prevent the pad moving along the rail, a substantially rectangular recess 2 is formed at the centre of each side of the pad and in that recess will project a part of one of the clip-anchoring devices.

The material of which the pad is made, by a moulding process, is a thermoplastic copolyester elastomer of high flexural strength and it is of uniform composition throughout the pad.

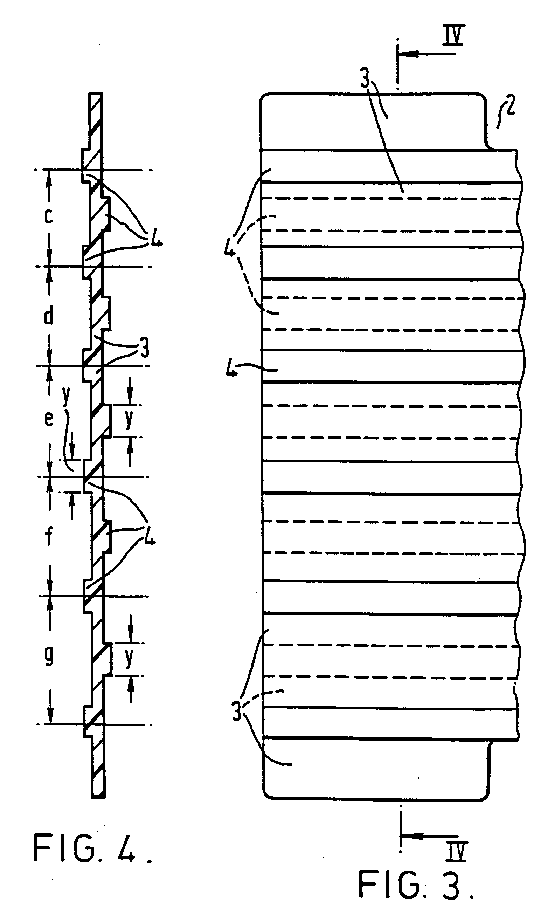

The pad comprises a central membrane 3 from both faces of which protrude ribs 4 of substantially rectangular cross-section which are all similar and extend the entire length of the pad, i.e. in the direction of travel of the vehicles over the pad. On each face the ribs are of width y and they are spaced apart by a distance x which is three times y. Each rib except the ones nearest the recesses 2 lies centrally between two ribs protruding from the opposite face of the membrane; this is true also of the pads shown in Figures 3 and 4.

The thickness of the membrane is b and the height of each rib is a which may conveniently be in the range 0.5b to 0.75b.

The pad of Figures 1 and 2 does not embody the present invention, as its ribs are not so arranged that the pad is stiffer on one side than the other. However, the pad shown in Figures 3 and 4, which is similar to that of Figures 1 and 2, is stiffer on the side shown uppermost in Figure 3 than on the side shown lowermost, this being on account of the fact that the ribs 4, all of which are of width y and in every respect similar, are closer together at the side shown uppermost. The pitch c of the two ribs shown to the left at the top end of Figure 4 is, in the example shown, three times the width y of the ribs and the pitches d e, f, and g between the other pairs of adjacent ribs on the same face of the membrane 3 are 1.125 c, 1.25 c, 1.375 c and 1.5 c, respectively.

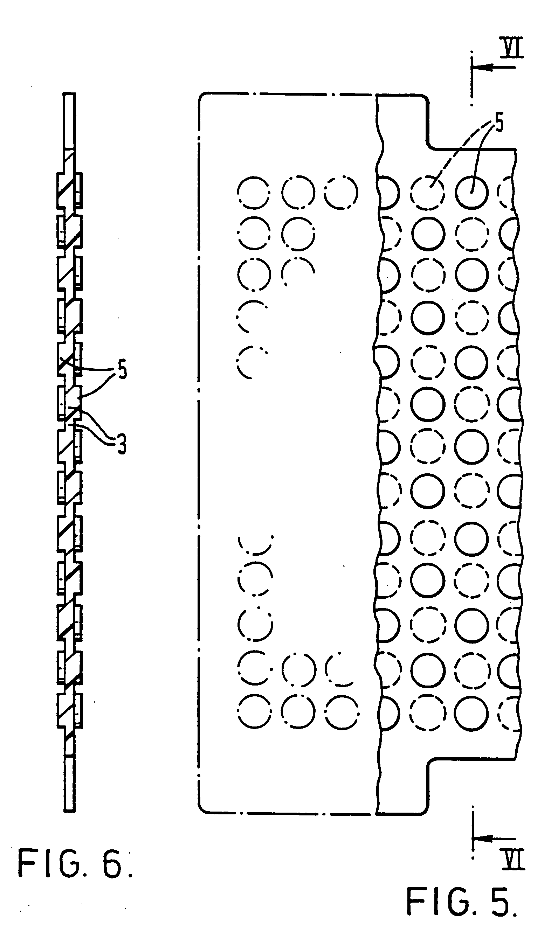

Figures 5 and 6 show part of a pad which is the same as that of Figures 1 and 2, i.e. does not embody the present invention, except that the protrusions on both faces are islands, each completely surrounded by a part of the membrane 3 which is free from protrusions. In the illustrated case each protrusion has a circular end face and is in the form of a short cylinder or cylindrical stud 5, the height of which is in the range 0.5 to 0.75 times the thickness of the membrane 3. The studs are all similar and arranged with uniform spacing in rows extending parallel to the length of the pad and with uniform spacing in columns extending parallel to the width of the pad. Except at the edges of the pad, each stud is opposite the centre of a group of four studs protruding from the opposite face of the membrane.

The pad of Figures 5 and 6 could be modified to make it stiffer at one side than at the other side, by having the studs 5 closer together and/or wider at that side than at the other side. Likewise the ribs shown in Figures 1 and 2 or in Figures 3 and 4 could be wider at one side of the pad than at the other side.

## Claims

1. A pad which is suitable for positioning between the foot of a railway rail and an underlying rail foundation in order to cushion the rail from the foundation, the pad comprising a uniformly-thick membrane (3) of elastomeric material having protrusions (4 or 5) of uniform height extending from its two major faces, such that when the membrane (3) is horizontal no vertical line passes through more than one protrusion (4, 5), characterised in that the stiffness of the pad varies from one edge of the pad to that edge of the pad which is opposite said one edge, such that the pad is stiffer in the vicinity of the said one edge than in the vicinity of the opposite edge.

2. A pad according to claim 1, characterised in that the ratio between a total area of protruding material (4 or 5) and the total area of membrane (3) free from protrusions (4 or 5) is greater at the stiffer part of the pad than at the less stiff part of the pad.

3. A pad according to claim 2, characterised in that the protrusions (4 or 5) are all identical and their spacing in the direction of the width of the pad increases from the stiffer part to the less stiff part of the pad.

4. A pad according to claim 1, 2 or 3, characterised in that each protrusion (5) is an island.

5. A pad according to claim 4, characterised in that each protrusion (5) has a circular end face.

6. A pad according to claim 5, characterised in that each protrusion (5) is a short cylinder.

7. A pad according to claim 1, 2 or 3, characterised in that each protrusion (4) is elongate as seen from above when the membrane (3) is horizontal.

8. A pad according to claim 7, characterised in that each protrusion (4) is a rib extending along the entire length of the pad, measured in the direction in which vehicles are intended to travel over the pad.

9. A pad according to claim 7 or 8, characterised in that each protrusion (4) is of rectangular cross-section.

## Patentansprüche

1. Eine Unterlage, die geeignet ist zwischen dem Fuß einer Eisenbahnschiene und einem darunterliegenden Schienenfundament angeordnet zu werden, um die Schiene gegenüber dem Fundament zu dämpfen, wobei die Unterlage eine gleichmäßig dicke Membrane (3) aus Elastomermaterial mit von ihren Hauptflächen abstehenden gleich hohen Vorsprüngen (4 oder 5) umfaßt, sodaß bei horizontaler Membrane (3) keine vertikale Linie durch mehr als einen Vorsprung (4,5) durchgeht, dadurch gekennzeichnet, daß sich die Steifigkeit der Unterlage von einem Rand der Unterlage zu dem diesem gegenüberliegenden Rand der Unterlage verändert, sodaß die Unterlage in der Nähe dieses einen Randes steifer ist als in der Nähe des gegenüberliegenden Randes.

2. Eine Unterlage gemäß Anspruch 1, dadurch gekennzeichnet, daß das Verhältnis eines Gesamtbereiches an vorspringendem Material (4 oder 5) zu einem, von Vorsprüngen (4 oder 5) freien Gesamtbereich der Membrane (3) in dem steiferen Teil der Unterlage größer ist als in dem weniger steifen Teil der Unterlage.

3. Eine Unterlage gemäß Anspruch 2, dadurch gekennzeichnet, daß alle Vorsprünge (4 oder 5) identisch sind und daß deren Abstände in Richtung der Breite der Unterlage vom steiferen Teil zum weniger steifen Teil der Unterlage ansteigen.

4. Eine Unterlage gemäß Anspruch 1,2 oder 3, dadurch gekennzeichnet, daß jeder Vorsprung (5) eine Insel ist.

5. Eine Unterlage gemäß Anspruch 4, dadurch gekennzeichnet, daß jeder Vorsprung (5) eine kreisförmige Endfläche besitzt.

6. Eine Unterlage gemäß Anspruch 5, dadurch gekennzeichnet, daß jeder Vorsprung (5) ein kurzer Zylinder ist.

7. Eine Unterlage gemäß Anspruch 1,2 oder 3, dadurch gekennzeichnet, daß jeder Vorsprung (4) bei horizontaler Membrane (3) von oben gesehen langgestreckt ist.

8. Eine Unterlage gemäß Anspruch 7, dadurch gekennzeichnet, daß jeder Vorsprung (4) eine Rippe ist, die sich über die gesamte, in der für die Fahrzeuge zum Überfahren der Unterlage vorgesehenen Richtung gemessene Länge der Unterlage erstreckt.

9. Eine Unterlage gemäß Anspruch 7 oder 8, dadurch gekennzeichnet, daß jeder Vorsprung (4) einen rechteckigen Querschnitt aufweist.

## Revendications

1. Semelle qui est adaptée pour être positionnée entre le patin d'un rail de chemin de fer et une assise sous-jacente de rail afin d'isoler le rail vis-à-vis de l'assise, la semelle comprenant une membrane (3) d'épaisseur uniforme en matériau élastique comportant des saillies (4 ou 5) de hauteur uniforme s'étendant depuis ses deux faces principales, de telle sorte que lorsque la membrane (3) est horizontale, aucune ligne verticale ne traverse plus d'une saillie (4, 5), caractérisée en ce que la rigidité de la semelle varie depuis un premier bord de la semelle jusqu'au bord de la semelle qui est opposé audit premier bord, de telle sorte que la semelle soit plus rigide au voisinage dudit premier bord qu'au voisinage du bord opposé.

2. Semelle selon la revendication 1, caractérisée en ce que le rapport entre la superficie totale du matériau saillant (4 ou 5) et la superficie totale de la membrane (3) exempte de saillies (4 ou 5) est plus grande dans la partie plus rigide de la semelle que dans la partie moins rigide de la semelle.

3. Semelle selon la revendication 2, caractérisée en ce que les saillies (4 ou 5) sont toutes identiques et que leur espacement dans le sens de la largeur de la semelle augmente depuis la partie plus rigide vers la partie moins rigide de la semelle.

4. Semelle selon la revendication 1, 2 ou 3, caractérisée en ce que chaque saillie (5) forme un îlot.

5. Semelle selon la revendication 4, caractérisé en ce que chaque saillie (5) a une face d'extrémité circulaire.

6. Semelle selon la revendication 5, caractérisée en ce que chaque saillie (5) est un cylindre creux.

7. Semelle selon la revendication 1, 2 ou 3, caractérisée en ce que chaque saillie (4) a une forme allongée telle que vue depuis le dessus lorsque la membrane (3) est horizontale.

8. Semelle selon la revendication 7 caractérisée en ce que chaque saillie (4) est une nervure s'étendant le long de la totalité de la longueur de la semelle, mesurée dans la direction de déplacement envisagé des véhicules sur la semelle.

9. Semelle selon la revendication 7 ou 8, caractérisée en ce que chaque saillie (4) a une section transversale rectangulaire.
